## Europäisches Patentamt
## European Patent Office
## Office européen des brevets

(11) Veröffentlichungsnummer: **0 111 150 B1**

(12)
# EUROPÄISCHE PATENTSCHRIFT

(45) Veröffentlichungstag der Patentschrift:
29.11.89

(51) Int. Cl.⁴: **H 04 N 9/82**

(21) Anmeldenummer: **83110935.0**

(22) Anmeldetag: **03.11.83**

(54) Videorecorder mit Aufzeichnung eines modifizierten Farbträgers.

(30) Priorität: **11.11.82 DE 3241736**

(43) Veröffentlichungstag der Anmeldung:
**20.06.84 Patentblatt 84/25**

(45) Bekanntmachung des Hinweises auf die Patenterteilung:
**29.11.89 Patentblatt 89/48**

(84) Benannte Vertragsstaaten:
**AT BE DE FR GB IT NL SE**

(56) Entgegenhaltungen:
**DE-B- 1 252 731**
**US-A- 4 188 638**
**US-A- 4 359 756**

(73) Patentinhaber: **TELEFUNKEN Fernseh und Rundfunk GmbH, Göttinger Chaussee 76, D-3000 Hannover 91 (DE)**

(72) Erfinder: **Kluth, Hans-Jürgen, Ing. grad., Weichselstrasse 11, D-7730 VS-Villingen (DE)**

(74) Vertreter: **Einsel, Robert, Dipl.-Ing., TELEFUNKEN Fernseh und Rundfunk GmbH Göttinger Chaussee 76, D-3000 Hannover 91 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Bei Videorecordern nach dem System VHS, Video 2000 und Betamax ist es bekannt, den PAL-Farbträger von seiner Originalfrequenz von 4,43 MHz auf eine Frequenz von etwa 625 kHz herabzusetzen und mit dieser herabgesetzten Frequenz unterhalb des Frequenzspektrums des mit dem Videosignal frequenzmodulierten Bildträgers aufzuzeichnen. Während der ursprüngliche PAL-Farbträger eine Bandbreite von ± 1 MHz hat, hat der aufgezeichnete Farbträger z. B. nur noch eine Bandbreite von ± 300 kHz.

Durch diese verringerte Bandbreite des aufgezeichneten Farbträgers entsteht bei der Wiedergabe eine Verringerung des Schärfeeindruckes bei Farbtonsprüngen in Horizontalrichtung insbesondere bei hoher Farbsättigung. Der Schärfeeindruck läßt sich an sich dadurch verbessern, daß der Farbträger mit einer größeren Bandbreite von z. B. 500–600 kHz aufgezeichnet wird. Für eine derartige Bandbreite ist jedoch unterhalb des Frequenzspektrums des Bildträgers nicht immer ein ausreichender Frequenzbereich vorhanden, insbesondere wenn dort weitere Signale wie z. B. Steuersignale aufgezeichnet werden.

Der Erfindung liegt die Aufgabe zugrunde, bei der Aufzeichnung mit einem in der Frequenz herabgesetzten Farbträger und geringer Bandbreite den Bildschärfeeindruck bei der Wiedergabe zu verbessern, ohne daß die Bandbreite des aufgezeichneten Farbträgers vergrößert werden muß.

Dabei geht die Erfindung von einem Stand der Technik aus, wie er z. B. aus der US-A-4 188 638 bekannt ist.

Diese Aufgabe wird durch die im Anspruch 1 beschriebene Erfindung gelöst. Vorteilhafte Weiterbildungen der Erfindung sind in den Unteransprüchen beschrieben.

Die Erfindung beruht auf folgender Überlegung. Wenn ein PAL-Farbträger in einer Laufzeit-Signalaufspaltschaltung in seine beiden den Modulationsachsen entsprechenden Komponenten getrennt wird, so enthalten diese beiden farbträgerfrequenten Signale keine Phasenmodulation, sondern nur noch eine Amplitudenmodulation mit unterdrücktem Träger, also Phasensprünge um 180°. Diese beiden farbträgerfrequenten Komponenten werden je für sich in der Frequenz um denselben Betrag herabgesetzt. Danach wird die durch die Frequenzverringerung beeinträchtigte Amplitudenmodulation dieser Signale beseitigt und durch ein breitbandiges Videosignal wieder eingeführt, das vor der Frequenzherabsetzung aus den beiden farbträgerfrequenten Signalen gewonnen ist. Vorzugsweise erfolgt dieses mit einem Amplitudenbegrenzer, dessen Begrenzungspegel in positiver und negativer Richtung durch die aus den farbträgerfrequenten Signalen großer Bandbreite gewonnenen videofrequenten Signale gesteuert sind. Die Farbauflösung selbst wird durch die erfindungsgemäße Lösung nicht beeinflußt, weil die Bandbreite des aufgezeichneten Farbträgers unverändert bleibt. Der bei der Bildwiedergabe besonders störende Schärfeverlust bei Farbtonsprüngen wird jedoch erheblich verringert.

Ein Ausführungsbeispiel der Erfindung wird an Hand der Zeichnung erläutert. Darin zeigen

Fig. 1 ein Blockschaltbild für die Aufnahme,

Fig. 2 ein Schaltungsbeispiel für einen Begrenzer,

Fig. 3 Kurven zur Erläuterung der Wirkungsweise der Schaltung nach Fig. 2,

Fig. 4 eine Schaltung zur Erzeugung der videofrequenten Signale und

Fig. 5 im Prinzip die durch die Erfindung erzielte Versteilerung bei Farbtonsprüngen. Dabei zeigen die kleinen Buchstaben a–d, an welchen Punkten in Fig. 2 und 4 die Signale gemäß Fig. 3 stehen.

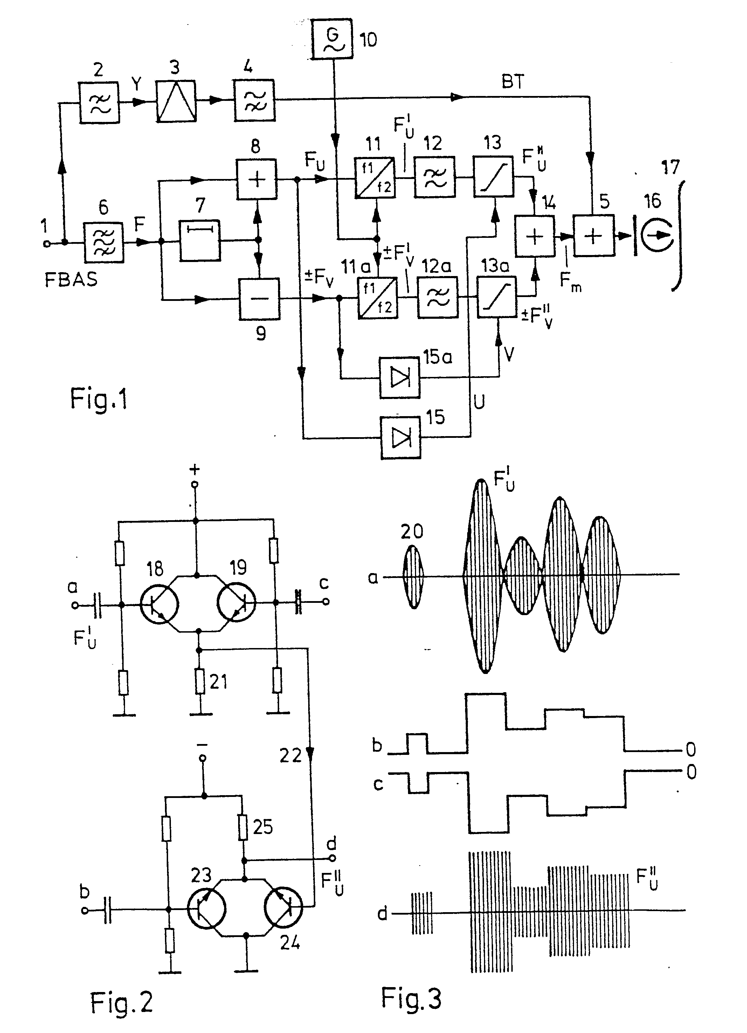

In Fig. 1 steht an der Klemme 1 das PAL-FBAS-Signal. Aus dem FBAS-Signal wird das Leuchtdichtesignal Y mit dem Tiefpaß 2 abgetrennt und über den FM-Modulator 3 und den Hochpaß 4 mit einer Grenzfrequenz von 1 MHz als Bildträger BT der Addierstufe 5 zugeführt. Mit dem Bandpaß 6 mit einer Durchlaßbandbreite von 4,43 MHz ± 1 MHz wird der Farbträger F mit der Frequenz von 4,43 MHz ± 1 MHz ausgewertet und der Laufzeit-Signalaufspaltschaltung mit der Zeilenverzögerungsleitung 7, der Addierstufe 8 und der Subtrahierstufe 9 zugeführt. Die Wirkungsweise dieser Aufspaltschaltung ist näher beschrieben in der DE-PS-1 252 731. Durch die Schaltung 7–9 wird der quadraturmodulierte PAL-Farbträger F in die beiden den Modulationsachsen entsprechenden farbträgerfrequenten Signale $F_U$ und ± $F_V$ aufgespalten. Dabei entspricht U der Modulationsachse B–Y und V der Modulationachse R–Y. Das farbträgerfrequente Signal $F_U$ wird in dem vom Oszillator 10 gesteuerten, als Mischstufe wirkenden Frequenzumsetzer 11 in ein farbträgerfrequentes Signal $F_U'$ von 625 kHz ± 300 kHz umgesetzt. Dieses Signal gelangt über den Tiefpaß 12 mit einer Grenzfrequenz von 700 kHz auf den Amplitudenbegrenzer 13, der das farbträgerfrequente Signal $F_U''$ an die Addierstufe 14 liefert. In dem Amplitudenbegrenzer 13 werden durch eine entsprechend hohe Amplitude des Signales $F_U'$ die Schwingungen des farbträgerfrequenten Signals versteilert. Die Amplitudenmodulation des Signales $F_U'$ geht dabei zunächst verloren. Das Signal $F_U$ am Ausgang der Addierstufe 8 mit der Frequenz von 4,43 MHz und der Bandbreite von ± 1 MHz wird in dem Amplitudengleichrichter 15 gleichgerichtet, und zwar getrennt für die positiven und negativen Halbwellen. Die dadurch gewonnenen videofrequenten Signale U, V steuern die Begrenzungspegel des Amplitudenbegrenzers 13 in positiver und negativer Richtung. Die Begrenzerwirkung tritt also jeweils bei einem Pegel ein, der den Amplitudenwert der zugeführten videofrequenten Signale entspricht. Dadurch hat das Signal $F_U''$ wieder die ursprüngliche Amplitudenmodulation, jedoch mit einer größeren Videobandbreite, weil das Signal $F_U$ vor der Frequenzumsetzung noch die volle Videobandbreite von ± 1 MHz hat. Das Signal $F_U''$ ist also gegenüber dem Signal $F_U'$ hinsichtlich der Steilheit der Farbträgerschwingungen und der Bandbreite des aufmodulierten Signals verbessert.

Die Stufen 11a, 12a, 13a, 15a wirken auf die gleiche Weise für das Signal $\pm F_V$. Dessen zeilenfrequenter Polaritätswechsel aufgrund der PAL-Umschaltung braucht durch die Schaltung nicht berücksichtigt zu werden und bleibt erhalten. In der Addierstufe 14 ergibt die Summe $F_U'' \pm F_V''$ den quadraturmodulierten, modifizierten Farbträger Fm mit der Frequenz von 625 kHz. Dieser wird in der Addierstufe 5 mit Bildträger BT und ggf. weiteren Signalen wie modulierten Tonträgern oder Steuersignalen addiert und dann mit dem Videokopf 16 auf dem Magnetband 17 aufgezeichnet. Der Farbträger Fm gemäß Fig. 1 bewirkt bei der Wiedergabe eine bessere Bildschärfe bei Farbtonsprüngen in Horizontalrichtung als ein Farbträger, der lediglich durch Frequenzherabsetzung des Farbträgers F gewonnen ist.

Fig. 2 zeigt eine Schaltung für den Amplitudenbegrenzer 13. Die Wirkungsweise wird an Hand der Fig. 3 erläutert. Der erste Teil des Amplitudenbegrenzers mit den beiden parallel geschalteten Transistoren 18, 19 wirkt für die negativen Halbwellen des an der Klemme a zugeführten farbträgerfrequenten Signals $F_U'$ gemäß Fig. 3a. Durch die verringerte Bandbreite dieses Signals hat das Farbsynchronsignal 20 und das für verschiedene Farbtöne dargestellte, senkrechte Farbbalken darstellende Signal $F_U'$ keine rechteckförmige Hüllkurve, sondern die in Fig. 3a dargestellte verschliffene Hüllkurve, die bei der Bildwiedergabe den beschriebenen Schärfeverlust bewirkt. An der Klemme c wird das durch Gleichrichtung der negativen Halbwellen des Signales $F_U$ gewonnene Signal vom Ausgang des Gleichrichtes 15 zugeführt. Am Emitter-Arbeitswiderstand 21 entstehen dann Farbträgerschwingungen negativer Amplitude mit durch die Amplitudenbegrenzung erhöhter Steilheit und mit einer durch den Begrenzungspegel bestimmten versteilerten Hüllkurve gemäß dem Signal nach Fig. 3c. Dieses Signal gelangt über die Leitung 22 auf die zweite Stufe mit den Transistoren 23, 24 und dem Emitter-Arbeitswiderstand 25. An der Klemme b wird das Signal gemäß Fig. 3b zugeführt, das durch Gleichrichtung der positiven Halbwellen im Gleichrichter 15 gewonnen ist. Am Ausgang d gemäß Fig. 3d entsteht dann das farbträgerfrequente Signal $F_U''$. Dessen Einhüllende in positiver und negativer Richtung ist aufgrund der Signale gemäß Fig. 3b und c wieder in erwünschter Weise annähernd rechteckförmig entsprechend dem ursprünglichen Farbträger F und den beiden breitbandigen Signalen $F_U$ und $\pm F_V$.

Die Schaltung gemäß Fig. 2 ist für den Amplitudenbegrenzer 13a noch einmal mit gleichem Aufbau vorgesehen und liefert entsprechend das Signal $\pm F_V''$ gemäß Fig. 1.

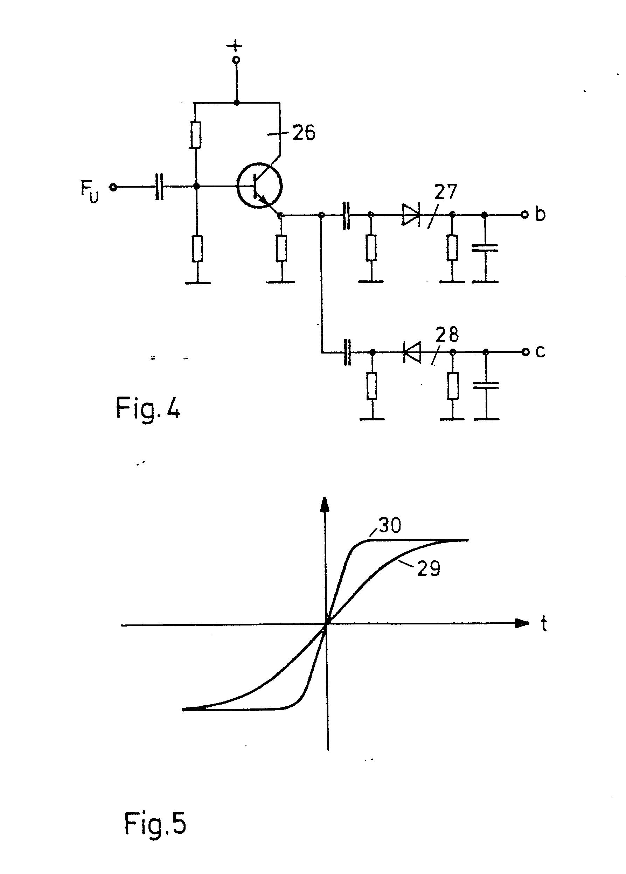

Fig. 4 zeigt eine Schaltung für den Gleichrichter 15 und 15a zur Erzeugung der videofrequenten Signale für die Steuerung der Begrenzungspegel der Amplitudenbegrenzer 13 und 13a. Das Signal $F_U$ wird über die Emitterfolgerstufe 26 einer ersten Gleichrichterschaltung 27 zur Erzeugung des positiv gerichteten Signals gemäß Fig. 3b und der Gleichrichterschaltung 28 zur Erzeugung des negativ gerichteten Signals gemäß Fig. 3c zugeführt. Diese Schaltung ist in gleicher Weise vorgesehen für den Gleichrichter 15 und den Gleichrichter 15a.

Fig. 5 zeigt die erreichte Versteilerung eines Farbsprunges. Der Farbsprung 29 gilt für eine Bandbreite des aufgezeichneten Farbträgers von $\pm$ 300 kHz, wie er ohne Anwendung der Erfindung entsteht. Der Farbsprung 30 gilt für einen erfindungsgemäß aufbereiteten Farbträger und entspricht einer Sprungbandbreite von $\pm$ 600 kHz. Es ist ersichtlich, daß der Farbsprung 30 bei der Bildwiedergabe eine bessere Bildschärfe ergibt als der Farbsprung 29.

**Patentansprüche**

1. Videorecorder mit Aufzeichnung eines modifizierten Farbträgers (Fm), der durch Frequenzherabsetzung eines PAL-Farbträgers (F) gewonnen ist und in dem besagter PAL-Farbträger (F) einer PAL-Laufzeit-Signalaufspaltschaltung (7–9) zugeführt wird, die an ihren beiden Ausgängen zwei den beiden Modulationsachsen (U, V) entsprechende farbträgerfrequente Signale ($F_U$, $\pm F_V$) liefert und bei dem diese farbträgerfrequenten Signale von ihrer Amplitudenmodulation befreit und neu moduliert werden und die neu modulierten farbträgerfrequenten Signale zum Erzeugen des modifizierten Farbträgers zusammen addiert werden, gekennzeichnet durch folgende Merkmale:

a) die beiden farbträgerfrequenten Signale ($F_U$, $\pm F_V$) werden je für sich in der Frequenz um denselben Betrag herabgesetzt (Stufen 11, 11a),

b) die in der Frequenz herabgesetzten farbträgerfrequenten Signale ($F_U'$, $\pm F_V'$) werden zur Befreiung von ihrer Amplitudenmodulation Amplitudenbegrenzern (13, 13a) zugeführt und durch videofrequente Signale (b und c in Fig. 3b und 3c) neu moduliert, die durch Amplitudenmodulation (15) der farbträgerfrequenten Signale ($F_U$, $\pm F_V$) vor der Frequenzumsetzung gewonnen sind,

c) die in der Amplitude neu modulierten farbträgerfrequenten Signale ($F_U''$, $\pm F_V''$) werden zum Erzeugen des aufzuzeichnenden modifizierten Farbträgers (Fm) zusammenaddiert.

2. Recorder nach Anspruch 1, dadurch gekennzeichnet, daß der Begrenzungspegel der Amplitudenbegrenzer (13, 13a) in positiver und negativer Richtung symmetrisch durch die videofrequenten Signale (b und c in Fig. 3b und 3c) gesteuert wird.

3. Recorder nach Anspruch 2, dadurch gekennzeichnet, daß der Begrenzer (13, 13a) eine Stufe mit zwei Transistoren (18, 19; 23, 24) enthält, deren Emitter und Kollektoren miteinander verbunden sind, daß das trägerfrequente Signal ($F_U'$, $\pm F_V'$) der Basis des einen Transistors (18, 24) und das videofrequente Signal (Fig. 3b, c) der Basis des anderen Transistors (19, 23) zugeführt und das entsprechend dem videofrequenten Signal in der Amplitude begrenzte farbträgerfrequente Signal ($F_U''$, $\pm F_V''$) von einem Arbeitswiderstand (21, 25) im Emitterkreis abgenommen ist.

4. Recorder nach Anspruch 3, dadurch gekennzeichnet, daß eine erste Begrenzerstufe (18, 19, 21) für die positiven Halbwellen und eine zweite Begrenzerstufe (23–25) für die negativen Halbwellen des farbträgerfrequenten Signals ($F_U'$, $\pm F_V'$) in Reihe geschaltet sind.

## Claims

1. A video recorder with recording of a modified colour carrier (Fm), which is obtained by lowering the frequency of a PAL colour carrier (F), and is supplied in the said PAL colour carrier (F) to a PAL propagation time signal division circuit (7–9), which delivers at its two outputs two colour carrier frequency signals ($F_U$, $\pm F_V$) corresponding to the two modulation axes (U, V) and in which these colour carrier frequency signals are relieved of their amplitude modulation and are re-modulated and the re-modulated colour carrier frequency signals are added together in order to produce the modified colour carrier, characterised by the following features:

a) the two colour carrier frequency signals ($F_U'$, $\pm F_V'$) are each lowered per se in frequency by the same amount (stages 11, 11a),

b) the colour carrier frequency signals ($F_U'$, $\pm F_V'$) which have been reduced in frequency are supplied to amplitude limiters (13, 13a) in order to relieve them of their amplitude modulation and are remodulated by video frequency signals (b and c in Figs. 3b and 3c) which are obtained by amplitude modulation (15) of the colour carrier frequency signals ($F_U$, $\pm F_V$) before frequency conversion

c) the amplitude re-modulated colour carrier frequency signals ($F_U''$, $\pm F_V''$) are added together to produce the modified colour carrier (Fm) which is to be recorded.

2. A recorder according to claim 1, characterised in that the limit level of the amplitude limiters (13, 13a) is controlled in a positive and a negative direction symmetrically by the video frequency signals (b and c in Figs. 3b and 3c).

3. A recorder according to claim 2, characterised in that the limiter (13, 13a) includes a stage with two transistors (18, 19; 23, 24), the emitters and collectors of which are connected together, that the carrier frequency signal ($F_U'$, $\pm F_V'$) is supplied to the base of one transistor (18, 24) and the video frequency signal (Fig. 3b, c) is supplied to the base of the other transistor (19, 23) and the colour carrier frequency signal ($F_U''$, $\pm F_V''$) limited in amplitude according to the video frequency signal is tapped in the emitter circuit by an operating resistor (21, 25).

4. A recorder according to claim 3, characterised in that a first limiter stage (18, 19, 21) for the positive half waves and a second limiter stage (23–25) for the negative half waves of the colour carrier frequency signal ($F_U'$, $\pm F_V'$) are connected in series.

## Revendications

1. Enregistreur vidéo, dans lequel est mis en œuvre l'enregistrement d'une porteuse couleur modifiée (Fm), qui est obtenue par réduction de la fréquence d'une porteuse couleur PAL (F) et est envoyée, dans ladite porteuse couleur PAL (F), à un circuit (7–9) de subdivision des signaux à temps de transit PAL, qui délivre, sur ses deux sorties, deux signaux ($F_U \pm F_V$), qui correspondent aux deux axes de modulation (U, V) et possèdent la fréquence de la porteuse couleur, et dans lequel ces signaux possédant la fréquence de la porteuse couleur sont libérés de leur modulation d'amplitude et sont à nouveau modulés et les signaux possédant la fréquence de la porteuse couleur, nouvellement modulés, sont additionnés de manière à fournir la porteuse couleur modifiée, caractérisé par les caractéristiques suivantes:

a) la fréquence des deux signaux ($F_U \pm F_V$), qui possède la fréquence de la porteuse couleur, est réduite, séparément pour chacun de ces signaux, d'une même valeur (étages 11, 11a),

b) les signaux ($F_U'$, $\pm F_V'$), qui possèdent la fréquence de la porteuse couleur, réduite, sont envoyés, en vue d'être libérés de leur modulation d'amplitude, à des limiteurs d'amplitude (13, 13a) et sont à nouveau modulés par des signaux possédant la fréquence vidéo (b et c sur les figures 3b et 3c), qui sont obtenus par modulation d'amplitude (15) des signaux ($F_U \pm F_V$) possédant la fréquence de la porteuse couleur, avant la conversion de fréquence,

c) les signaux ($F_U''$, $\pm F_V''$), qui possèdent la fréquence de la porteuse couleur et qui ont subi une nouvelle modulation d'amplitude, sont additionnés de manière à fournir la porteuse couleur (Fm) modifiée, devant être enregistrée.

2. Enregistreur selon la revendication 1, caractérisé en ce que le niveau de limitation des limiteurs d'amplitude (13, 13a), est commandé symétriquement, dans le sens positif et dans le sens négatif, par les signaux possédant la fréquence vidéo (b et c sur les figures 3b et 3c).

3. Enregistreur selon la revendication 2, caractérisé en ce que le limiteur (13, 13a) contient un étage comportant deux transistors (18, 19; 23, 24), dont les émetteurs sont reliés entre eux et dont les collecteurs sont reliés entre eux, que le signal ($F_U'$, $\pm F_V'$), qui possède la fréquence de la porteuse, est envoyé à la base d'un transistor (18, 24), que le signal possédant la fréquence vidéo (figures 3b, c) est envoyé à la base de l'autre transistor (19, 23) et que le signal ($F_U''$, $\pm F_V''$), qui possède la fréquence de la porteuse couleur et dont l'amplitude est limitée conformément au signal possédant la fréquence vidéo, est prélevé sur la résistance de travail (21, 25) située dans le circuit d'émetteur.

4. Enregistreur selon la revendication 3, caractérisé en ce qu'un premier étage formant limiteur (18, 19, 21) pour les alternances positives et un second étage formant limiteur (23–25) pour les alternances négatives du signal ($F_U'$, $\pm F_V'$) possédant la fréquence de la porteuse couleur sont branchés en série.

EP 0 111 150 B1

Fig.1

Fig.2

Fig.3

Fig. 4

Fig.5